# EUROPÄISCHE PATENTSCHRIFT

(11) **EP 0 808 259 B1**
(45) Veröffentlichungstag und Bekanntmachung des Hinweises auf die Patenterteilung: **09.05.2001**
(21) Anmeldenummer: 96902891.9
(22) Anmeldetag: 16.02.1996
(51) Int. Cl.: B60R 21/26, B60R 21/20

(54) **AIRBAGMODUL**
AIRBAG MODULE
MODULE DE SAC DE PROTECTION GONFLABLE

(30) Priorität: 17.02.1995 DE 19506886
(43) Veröffentlichungstag der Anmeldung: 26.11.1997
(73) Patentinhaber: Petri AG, 13187 Berlin (DE)
(72) Erfinder: ADOMEIT, Heinz-Dieter, D-10623 Berlin (DE); MAROTZKE, Thomas, D-13187 Berlin (DE); BRAUN, Eleonore, D-13505 Berlin (DE); JAHNKE, Harald, D-14052 Berlin (DE)
(74) Vertreter: Bärmann, Klaus, Dipl.-Ing.
(86) Internationale Anmeldenummer: DE9600294
(87) Internationale Veröffentlichungsnummer: WO9625309

(56) Entgegenhaltungen:
- EP-A- 0 593 010
- EP-A- 0 620 139
- EP-A- 0 694 446
- EP-A- 0 698 532
- DE-A- 1 956 677
- DE-C- 3 818 185
- US-A- 5 018 762
- US-A- 5 240 282
- US-A- 5 310 216
- US-A- 5 382 048

## Beschreibung

Die Erfindung betrifft eine Airbagmodul nach dem Oberbegriff des Anspruchs 1.

Gassack-Systeme, bei denen bei einem Unfall des Kraftfahrzeuges mit Hilfe eines Gasgenerators automatisch ein Kissen vor dem Insassen aufgeblasen wird, sind sowohl für den Fahrersitz als auch für den Beifahrersitz bekannt.

Der Gassack muß in kurzer Zeit aufgeblasen sein, damit ein sicherer Schutz des Insassen bei einem Aufprall des Kraftfahrzeuges gewährleistet ist. Praktisch erfolgt das Aufblasen innerhalb weniger Millisekunden. Damit wird gewährleistet, daß der Gassack bei einem Aufprall des Fahrzeuges bereits aufgeblasen ist, bevor der Insasse in Richtung des Gassackes geschleudert wird. Dabei wird vorausgesetzt, das sich der Insasse in einer normalen, durch die Sitze vorgegebenen Position befindet, so daß der Insasse den Gassack während des Aufblasens noch nicht berührt.

Dieser Normalfall liegt aber dann nicht vor, wenn sich der Insasse während des Aufpralls des Kraftfahrzeuges nach vorn gebeugt hat, und sich in der Regel mit dem Kopf innerhalb des für den aufblasbaren Gassack vorgesehenen Raumes befindet. Dann schlägt der in der o.g. kurzen Zeit aufgeblasene Gassack gegen den Insassen, wodurch es zu Verletzungen kommen kann.

Zur Vermeidung dieses Nachteils ist es aus der DE 42 27 559 A1 bekannt, den Gassack in Richtung des Insassen (Axialrichtung) mit vergleichsweise langsamer und in Seitwärtsrichtung mit vergleichsweise großer Expansionsgeschwindigkeit aufzublasen. Diese Vorrichtung weist aber den Nachteil auf, daß der Gassack in axialer Richtung noch nicht voll aufgeblasen sein kann, wenn der Insasse beim Aufprall nach vorn geschleudert wird, so daß er dadurch verletzt wird.

Obwohl einerseits vermieden werden soll, daß der Insasse den Gassack während seines Aufblasens berührt, ist es jedoch andererseits wünschenswert, daß der Insasse, auch wenn er sich während des Aufpralls in Normalposition befindet, den Gassack nach dessen Aufblasen möglichst frühzeitig berührt, ohne den Insassen zu gefährden. Das ist insbesondere beim Beifahrer-Airbag nicht gewährleistet, da sich bei diesem der Gassack im besonderen Maße auch in andere Richtungen als in Fahrerrichtung aufbläst. Daraus ergeben sich die Nachteile, daß die Entfernung zwischen dem aufgeblasenen Luftsack und dem Insassen relativ groß ist und daß die Fläche des Gassackes , mit der der Insasse in Berührung kommt, verkleinert wird. Dadurch wird die Flächenpressung auf den Insassen ungünstig beeinflußt.

Dieser Nachteil soll mit einem Airbagmodul vermieden werden, der aus der US-PS 5 306 042 bekannt ist. Bei diesem ist zwischen dem Gasgenerator und der Windschutzscheibe eine drehbare und verschiebbare Abdeckklappe vorgesehen, die in Richtung der Windschutzscheibe geschlossen ist und in Richtung des Gasgenerators und des Fahrzeuginsassen offen ist. Das aus dem Gasgenerator austretende Gas strömt gegen die Abdeckkappe und verdreht diese bis zu einem Anschlag so, daß der Gassack unterhalb des geschlossenen Abschnitts in Richtung auf den Insassen aufgeblasen wird.

Der Nachteil dieser Abdeckklappe besteht darin, daß sie gegenüber sonst üblichen Abdeckkappen, die integrierter Bestandteil der Verkleidung sind, erheblich aufwendiger ist.

Eine weitere bekannte Möglichkeit zur Beeinflussung der Ausbreitungsrichtung besteht in der Anwendung von Fangbändern, wie es aus EP 0 593 010 A1 bekannt ist. Das Einnähen von Fangbändern ist aber ebenfalls aufwendig.

Aus der EP 0 620 139 A1 ist ein Airbagmodul mit einem Gasgenerator, einem Gasdiffusor und einem Gassack bekannt, bei dem die Ausströmöffnungen in dem Gasdiffusor derart ausgebildet und angeordnet sind, daß eine möglichst gleichmäßige Verteilung der Gase in dem Gassack erreicht wird.

Der Erfindung liegt die Aufgabe zugrunde, einen Airbagmodul zu schaffen, der beim Aufprall des Fahrzeuges einen frühzeitigen Kontakt zwischen Gassack und Insassen bei verringerter Flächenpressung ermöglicht, ohne daß gegenüber bekannten Airbagmodulen erheblicher Mehraufwand erforderlich ist.

Diese Aufgabe wird erfindungsgemäß durch die Schaffung eines Airbagmoduls mit den Merkmalen des Patentanspruchs 1 gelöst.

Bei einem Airbagmodul, insbesondere für den Beifahrersitz, mit einem Gassack, einem Gasgenerator und einem diesen zugeordneten Gasdiffusor, ist der Gasdiffusor über dem Gasgenerator angeordnet und mit unterschiedlich großen Ausströmöffnungen versehen, wobei sich der Gassack im gefalteten Zustand zum überwiegenden Teil seitlich neben dem Gasdiffusor erstreckt. Mit einer solchen Baugruppe wird erreicht, daß der Gassack eine vergrößerte Flächenausdehnung in einer bestimmten Richtung und vor allem in Richtung des Insassen erreicht.

Aus den nachveröffentlichten, älteren Patentanmeldungen EP 0 694 446 A2 und EP 0 698 532 A1, die einen Stand der Technik nach Artikel 54(3) und (4) EPÜ darstellen, sind zwar bereits Airbagmodule bekannt, die einen Gasgenerator zum Aufblasen eines Gassackes, einen zwischen dem Gasgenerator und dem Gassack angeordneten Gasdiffusor mit unterschiedlich großen Ausströmöffnungen sowie einen zugehörigen Gassack umfassen; jedoch sind hier der Gasgenerator, der Gasdiffusor und der Gassack jeweils übereinander angeordnet, d.h. der Gasdiffusor über dem Gasgenerator und der Gassack wiederum über dem Gasdiffusor.

In einer bevorzugten Ausführungsform der Erfindung ist vorgesehen, daß der Gasdiffusor in der gewünschten Hauptentfaltungsrichtung des Gassackes gegenüber den übrigen Richtungen vergrößerte Ausströmöffnungen aufweist. Damit wird erreicht, daß auf Kosten der Ausdehnung des Gassackes in Richtung der Windschutzscheibe eine Ausdehnung des Gassackes in Richtung des Insassen erfolgt.

In einer weiteren Ausgestaltung der Erfindung ist vorgesehen, daß der Gasdiffusor asymmetrisch bezüglich des Rohrgasgenerators angeordnet ist.

Es ist weiterhin zweckmäßig, daß der Gassack eine asymmetrische Kontur aufweist. Durch diese wird das Aufblasen des Gassackes in eine bevorzugte Richtung unterstützt.

In einer Ausführungsform ist der Gassack neben dem Gasdiffusor eines Rohrgasgenerators asymmetrisch zu diesem gefaltet, wobei in einem Gasdiffusor-Bereich, der der Abdeckkappe für den Gassack benachbart ist, nur eine Lage des Gassackes vorgesehen ist. Weiterhin weist der Gasdiffusor auf der Seite, auf der die meisten Falten des Gassackes liegen, größere Ausströmöffnungen als auf den übrigen Seiten und insbesondere in dem Bereich auf, der der Abdeckkappe gegenüberliegt und nur eine Lage des Gassackes aufweist. Bei dieser Ausführung wird der Gassack durch die Gas-Beaufschlagung der Einzellage des Gassackes aus seiner gefalteten Lage gezogen, wobei wegen der größeren Ausströmöffnungen an der Seite, an der die meisten Falten liegen, die Entfaltung verstärkt in diese Richtung erfolgt.

In einer weiteren Ausführungsform ist vorgesehen, daß der sich in Längsrichtung des Rohrgasgenerators erstreckende Gasdiffusor in dieser Richtung ebenfalls unterschiedlich große Ausströmöffnungen aufweist.

In einer Ausführungsform ist vorgesehen, daß auf der Seite des Gasdiffusors, die der Seite des Gasdiffusors mit der größten Faltenzahl des Gassackes gegenüberliegt, nur eine Lage des Gassackes vorgesehen ist.

Die gerichtete Entfaltung des Gassackes wird auch dadurch unterstützt, daß der Gassack aus einem Oberteil und einem Unterteil besteht, daß er auf der zum Insassen zeigenden Seite so nach innen eingeschlagen ist, daß sich eine Tasche bildet, und daß weiterhin das Oberteil im Bereich der Tasche mit Reißnähten versehen ist. Bei dieser Ausführungsform wird durch das Einschlagen der Ober- und Unterseite die Ausdehnung des Gassackes im unaufgeblasenen Zustand verkürzt. Beim Aufblasvorgang wird im Bereich der Tasche zuerst das durch das Unterteil gebildete Volumen aufgeblasen, während der durch das Oberteil gebildete Abschnitt im Bereich der Tasche durch die Reißnähte am Entfalten gehindert wird. Anstelle eines senkrechten Aufsteigens wird der Gassack in Richtung der Hüfte des Insassen umgelenkt. Sobald der Gassack gut gefüllt ist und die Gewebespannung ein bestimmtes Maß überschreitet, reißen die Reißnähte und der Gassack entfaltet sich vollständig.

Die Erfindung soll in Ausführungsbeispielen anhand von Zeichnungen erläutert werden. Es zeigen:
- Fig. 1: eine bekannte Anordnung eines Airbagmoduls mit einem Fangband in einem Personenkraftwagen (PKW);
- Fig. 2a - c: einen über dem Gasgenerator angeordneten Gasdiffusor in zwei Ansichten und im Schnitt;
- Fig. 3a, b: einen Längs- und Querschnitt eines Airbagmoduls mit symmetrischer Anordnung des Gasdiffusors;
- Fig. 4a, b: einen Quer- und Längsschnitt durch ein Airbagmodul mit asymmetrischer Anordnung des Gasdiffusors;
- Fig. 5a, b: einen Quer- und Längsschnitt durch eine weitere Ausführungsform mit asymmetrischer Anordnung des Gasdiffusors;
- Fig. 6: ein Gehäuse mit Diffusor aus Strangpreßprofil;
- Fig. 7a, b: einen Gassack für einen Beifahrerairbag mit gesteuerter Entfaltung im Schnitt und in der Draufsicht;
- Fig. 8a - c: Einbaulagen für Beifahrer-Airbagmodule.

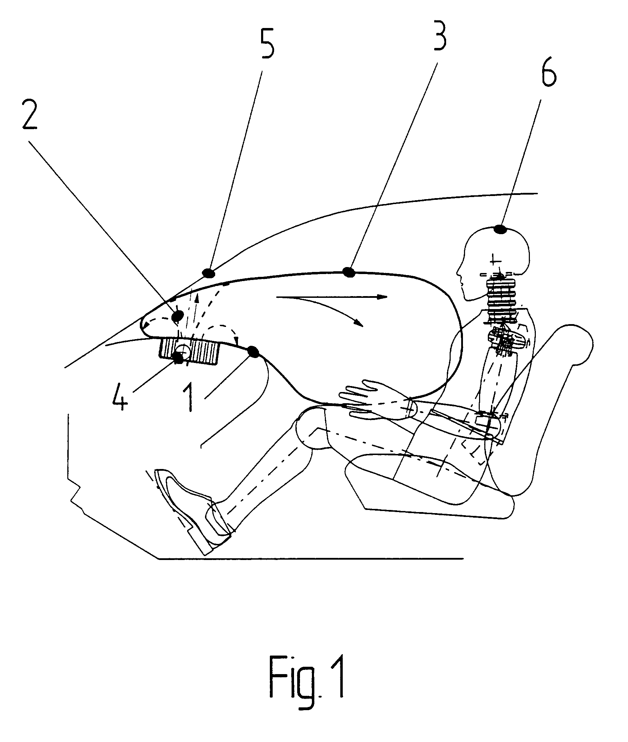

In der Fig. 1 ist zunächst ein bekanntes Airbagmodul für einen Beifahrersitz dargestellt. Die dort dargestellte Anordnung im PKW bezeichnet man als "topmounted". Anordnungen des Beifahrerairbagmoduls im Armaturenbrett vor dem Insassen werden als "mid-mounted" und in Richtung Fußraum als "low-mounted" bezeichnet.

Am Airbagmodul, das unterhalb des Armaturenbrettes 1 angeordnet ist, ist ein Fangband 2 im Bereich der Befestigung des Gassackes 3 am Gasgenerator 4 vorgesehen. Das Fangband 2 erstreckt sich im Gassack vom Bereich des Gasgenerators 4 ausgehend in Richtung der Windschutzscheibe 5 des Kraftfahrzeuges und verhindert beim Aufblasen des Gassackes dessen weitere Ausbreitung in Richtung der Windschutzscheibe 5.

Das Fangband soll eine Umlenkung des Gasstromes in Richtung des Insassen bewirken. Die weitere Ausbreitung des Gassakkes erfolgt deshalb in Richtung des Fahrzeuginsassen 6, d. h. obwohl der Gassack symmetrisch aufgebaut ist, erfolgt insbesondere infolge des Fangbandes ein asymmetrisches Aufblasen in Richtung auf den Fahrzeuginsassen. Dadurch wird die Fläche des Gassackes, gegen die der Fahrzeuginsasse bei einem Aufprall des Fahrzeuges geschleudert wird, vergrößert, so daß die Flächenpressung auf den Körper des Insassen verringert wird. Durch die Abstützung an der Windschutzscheibe sowie eine stark asymmetrische Form des Gassackes wird dieser Effekt noch unterstützt.

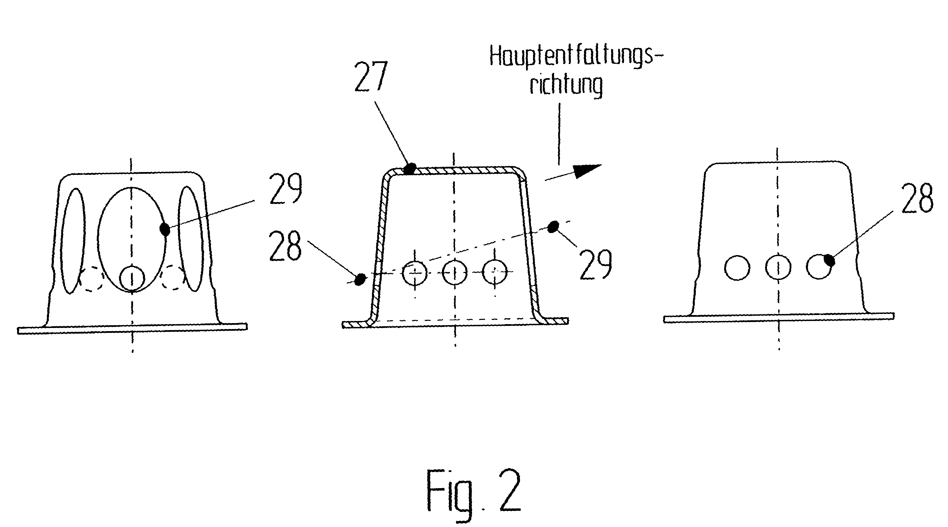

In den Figuren 2a bis 2c ist über dem nicht dargestellten Gehäuse mit dem Gasgenerator ein Gasdiffusor 27 vorgesehen, über den das Gas nach Zündung des Gasgenerators in den nicht dargestellten Gassack ausströmen kann. Der Gasdiffusor 27 weist Ausströmöffnungen 28 und 29 auf. Dabei sind die Ausströmöffnungen 29 in Richtung des Insassen, d. h. in der vorgesehenen Hauptentfaltungsrichtung des Gassackes, wesentlich größer als die Ausströmöffnungen 28 in entgegengesetzter Richtung bzw. quer dazu. Die Fig. 2a zeigt den Gasdiffusor 27 in einer Ansicht, bei der die größeren Ausströmöffnungen 29 in der Hauptentfaltungsrichtung erkennbar sind. Die Fig. 2c zeigt eine Ansicht des Gasdiffusors 27, bei der die kleineren, entgegen der Hauptentfaltungsrichtung vorgesehenen Ausströmöffnungen 28 erkennbar sind. Die Fig. 2b zeigt einen Mittelschnitt durch den Diffusor 27. Es ist erkennbar, daß quer zur Hauptentfaltungsrichtung ebenfalls nur kleinere Ausströmöffnungen vorgesehen sind. Mittels des dargestellten erfindungsgemäßen Gasdiffusors mit unterschiedlich großen Ausströmöffnungen kann die in Fig. 1 dargestellte Ausbreitung des Gassackes in Richtung des Insassen auch ohne Abdeckklappen oder Fangbänder erzielt werden.

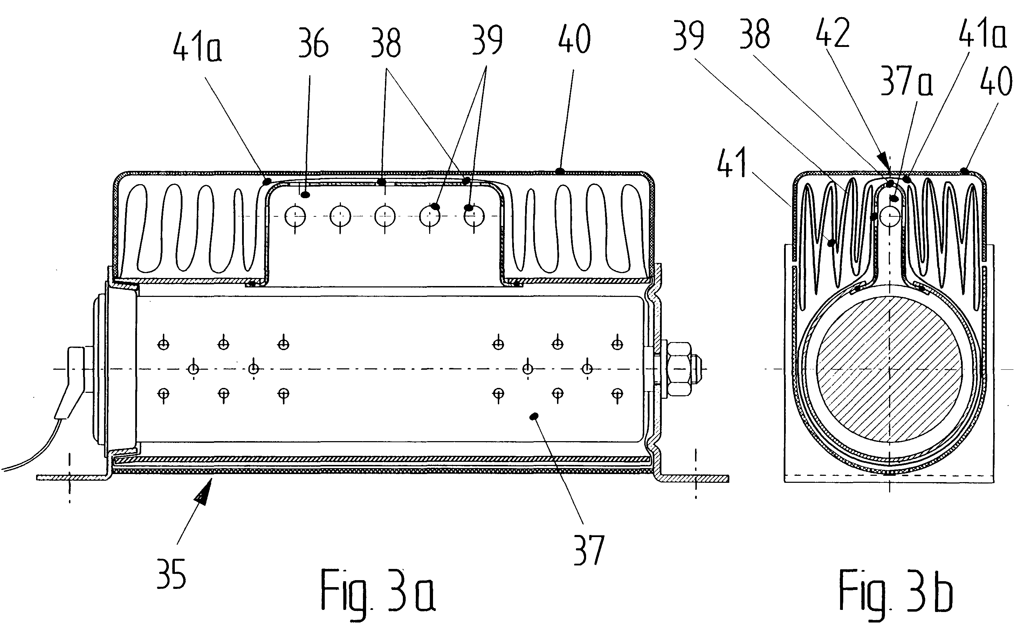

In den Figuren 3a und 3b ist ein komplettes Airbagmodul 35 dargestellt. Während der in den Figuren 2a bis 2c dargestellte kegelstumpfförmige Gasdiffusor vor allem für topfförmige Gasgeneratoren geeignet ist, zeigen die Figuren 3a und 3b einen quaderförmigen Gasdiffusor 36 in Verbindung mit einem Rohrgasgenerator 37. Der Gasdiffusor 36 ist symmetrisch bezüglich einer gedachten Mittelebene 37a des Rohrgasgenerators 37 angeordnet. Bei dieser Ausführungsform sind Ausströmöffnungen 38 des Gasdiffusors in Richtung einer Abdeckkappe 40 des Airbagmoduls 35 größer als Ausströmöffnungen 39 in Richtung des neben dem Gassdiffusor gefalteten Gassackes 41. Der Gassack ist um den Diffusor herum so gefaltet, daß zwischen den Ausströmöffnungen 38 und der Abdeckkappe nur eine Lage 41a des gefalteten Gassackes liegt, die beim Aufblasen das Herausziehen der Gassackfalten bewirkt. Die vergrößerten Ausströmöffnungen 38, die unmittelbar unterhalb einer Aufreißkante 42 der Abdeckkappe 40 liegen, bewirken einerseits ein schnelleres Aufreißen der Abdeckkappe 40 beim Aufblasen des Gassackes 41 und andererseits das schnelle Herausziehen des Gassackes aus dem Airbagmodul bevorzugt in die Richtung der größeren Ausströmöffnungen 38.

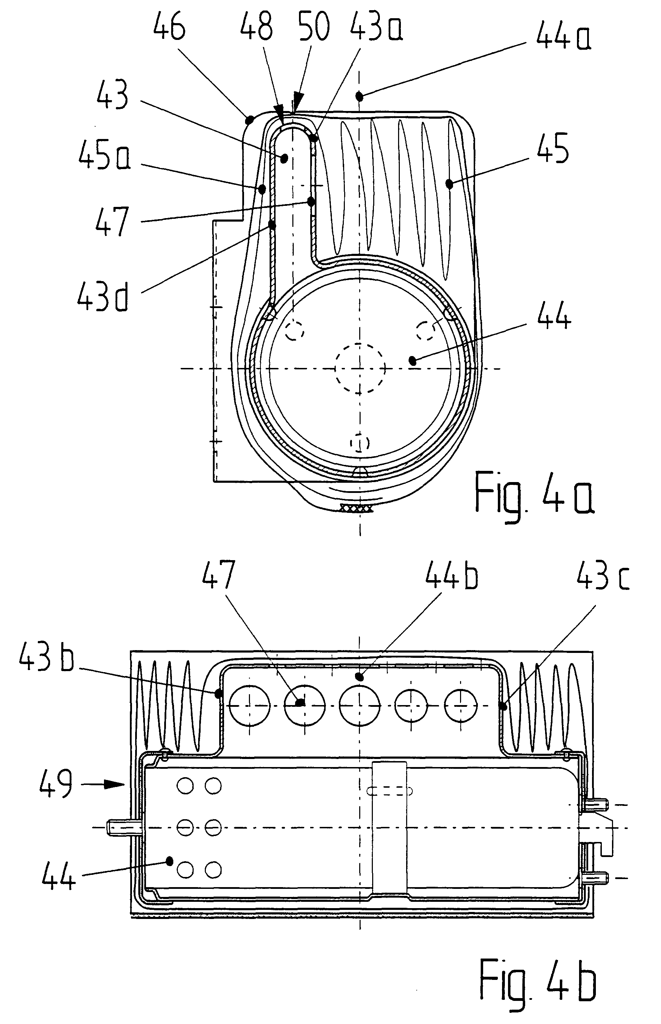

Bei der Ausführungsform der Figuren 4a und 4b ist ein Gasdiffusor 43 asymmetrisch bezüglich einer gedachten Mittelebene 44a eines Rohrgasgenerators 44 angeordnet. Auch bei dieser Ausführungsform ist der Gassack 45 seitlich des Gasdiffusors gefaltet. Der Unterschied der Faltung gegenüber dem vorigen Ausführungsbeispiel besteht darin, daß der Gassack nur an einer Längsseite 43a und den beiden Stirnseiten 43 b, 43 c des Gasdiffusors 43 gefaltet ist, während auf der anderen Seite 43 d des Gasdiffusors, wie zwischen dem Gasdiffusor 43 und einer Abdeckkappe 46, nur eine Einzellage 45a des Gassackes vorgesehen ist.

Bei dieser Ausführungsform sind Ausströmöffnungen 47 des Gasdiffusors in Richtung des gefalteten Gassackes 45 größer als Ausströmöffnungen 48 in Richtung einer Abdeckkappe 46 des Airbagmoduls 49. Außerdem weisen die größeren Ausströmöffnungen 47 noch unterschiedliche Größen auf, wie aus Fig. 4b ersichtlich ist. Auf der Seite 43d weist der Gasdiffusor in dieser Ausführungsform keine Ausströmöffnungen auf.

Weiterhin ist bei dieser Ausführungsform die Aufreißkante 50 der Abdeckkappe 46 entsprechend der asymmetrischen Lage des Gasdiffusors 43 ebenfalls asymmetrisch bezüglich der Mittelebene 44a des Rohrgasgenerators 44 angeordnet. Bei dieser Ausführungsform wird beim Aufblasen des Gassackes nach dem Aufreißen der Abdeckkappe 46 der Gassack vor allem in Richtung der größeren Ausströmöffnungen 47 entfaltet, d.h. asymmmetrisch bezüglich der Mittelebene 44a des Rohrgasgenerators. Wegen der unterschiedlichen Größe der Ausströmöffnungen 47 wird der Gassack auch bezüglich einer Mittelebene 44b asymmetrich entfaltet.

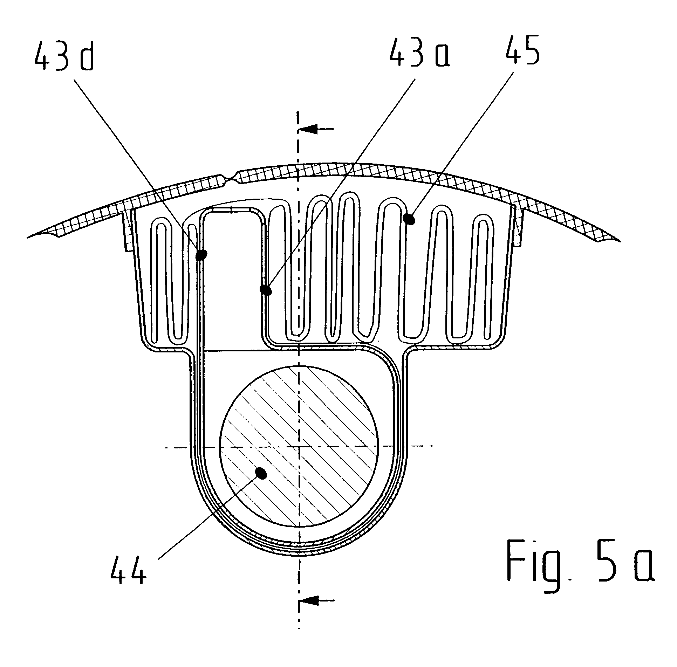

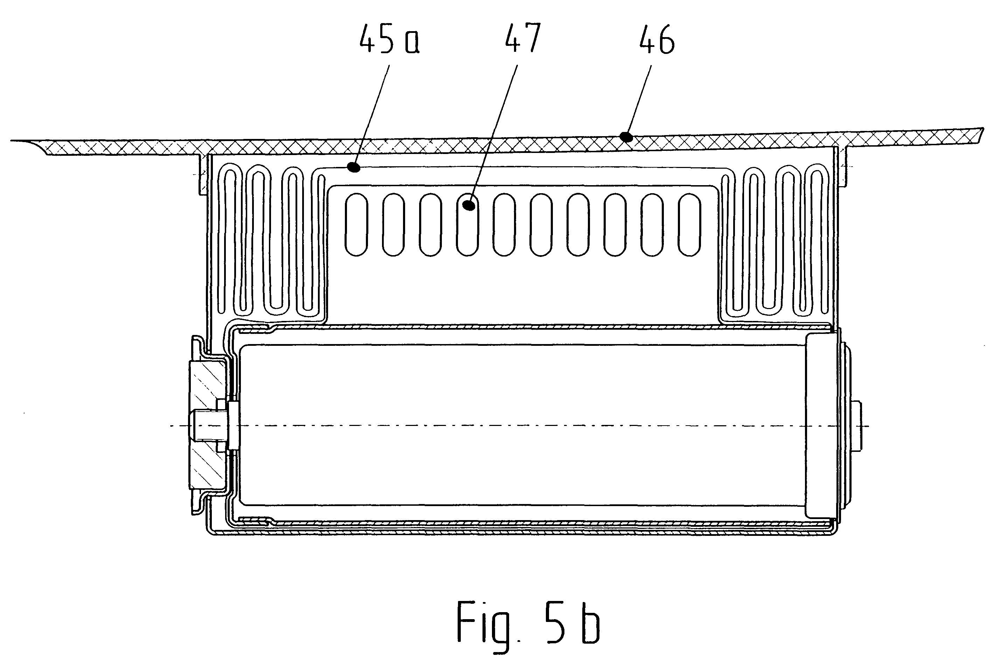

Ein gegenüber dem Ausführungsbeispiel der Figuren 4a und 4b abgewandeltes Ausführungsbeispiel ist in den Figuren 5a und 5b dargestellt. Dieses unterscheidet sich nur darin, daß anstelle der Einzellage 45a auf der Längsseite 43d des Gasdiffusors der Gassack auf dieser Seite ebenfalls gefaltet ist, wobei die Anzahl der Falten jedoch geringer ist als auf der gegenüberliegenden Seite 43a, wie aus Fig. 5a ersichtlich ist. Durch diese Faltung wird erreicht, daß die Hauptentfaltungsrichtung gegenüber der im vorigen Ausführungsbeispiel verändert wird.

Es ist erkennbar, daß mittels unterschiedlich großer Abströmöffnungen im Gasdiffusor und mittels der unterschiedlichen Anzahl Falten des Gassackes auf verschiedneen Seiten des Gasdiffusors die Entfaltungsrichtung des Gassackes beeinflußbar ist.

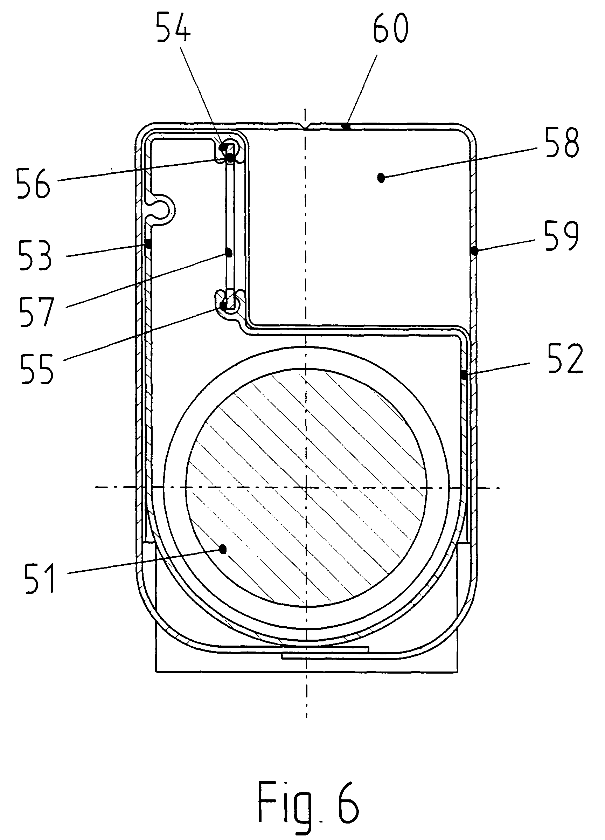

Eine weitere Ausführungsform eines Airbagmoduls zeigt die Fig. 6 als Querschnitt. Bei dieser Ausführungsform ist der Rohrgasgenerator 51 in einem Strangpreßprofil angeordnet, das sowohl ein Gehäuse 52 als auch einen Gasdiffusor 53 bildet. Dieses Strangpreßprofil muß nur auf die erforderliche Länge abgeschnitten und an den Enden mit Deckeln verschlossen werden, die in der Fig. 6 nicht dargestellt sind. Das Strangpreßprofil ist im Bereich des Gasdiffusors an einer Seite offen und weist in diesem Bereich zwei Führungsnuten 54, 55 auf. In diese Nuten sind vor dem Aufsetzen der Deckel Lochplatten 56 einschiebbar, die die Ausströmöffnungen des Gasdiffusors enthalten. Durch Auswechseln der Lochplatten ist es auf einfache und kostengünstige Art möglich, Gasdiffusoren mit unterschiedlich großen Ausströmöffnungen zu versehen. Der Rohrgasgenerator 51 und das umgebende Gehäuse 52 mit dem Gasdiffusor 53 sind bei dieser Ausführungsform im Gassack angeordnet (nicht dargestellt) und die Falten des Gassackes liegen in einem Raum 58 neben dem Diffusor. Diese gesamte Anordnung ist von einem Gehäuse 59 mit einer integrierten Abdeckkappe 60 umgeben.

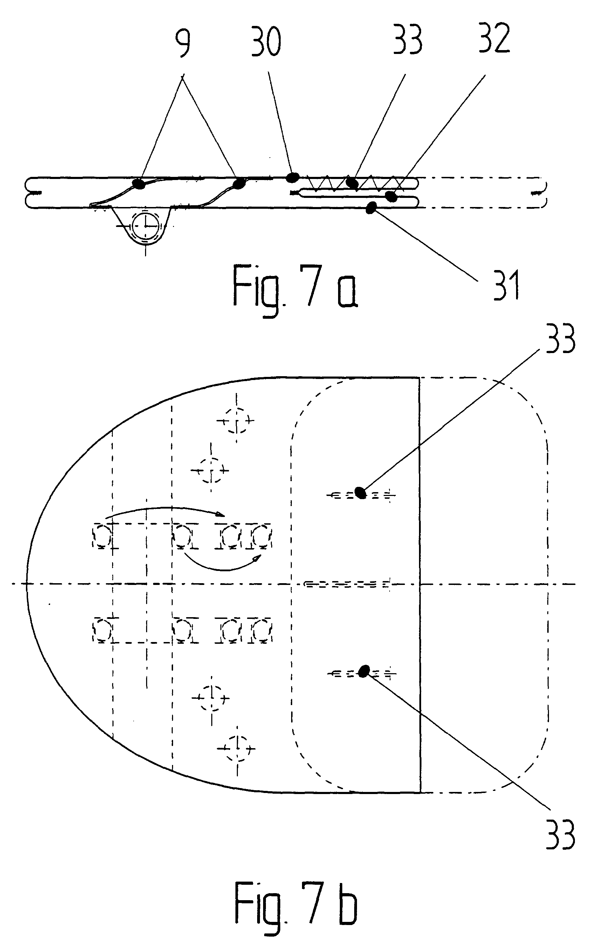

Eine weitere Möglichkeit, eine gesteuerte Gassackentfaltung zu erreichen, zeigen die Figuren 7a und 7b. Wie aus der Fig. 7a ersichtlich ist, ist die zum Insassen zeigende Seite des Gassackes nach innen eingeschlagen. Die strichpunktierte Linie zeigt die Umrisse des Luftsackes vor dem Einschlagen. Durch das Einschlagen wird die Ausdehnung des Gassackes in unaufgeblasenem Zustand verkürzt und im eingeschlagenen Bereich liegen vier Lagen Gassackgewebe übereinander. Zwischen dem Oberteil 30 und dem Unterteil 31 des Gassackes entsteht auf diese Weise eine Tasche 32. Das Oberteil 30 ist im Bereich der Tasche 32 mit Reißnähten 33 versehen.

Bei dieser Ausführungsform findet der Entfaltungsvorgang des Gassackes so statt, daß sich im verkürzten Gassackabschnitt das vom Unterteil 31 im Bereich der Tasche 32 gebildete Volumen zuerst mit Gas füllt. Der Gassack wird gezwungen, sich intensiv in Richtung auf den Insassen und nach unten zu entfalten. Anstatt senkrecht aufzusteigen wird der Gassack in Richtung der Hüfte des Insassen um das Armaturenbrett bogenförmig umgelenkt.

Sobald der Gassack gut gefüllt ist und die Gewebespannung ein bestimmtes Maß überschreitet, reißen die Reißnähte 33 und der Gassack entfaltet sich vollständig.

Mit den beschriebenen Ausführungsformen wird erreicht, daß der Gassack eine vergrößerte Flächenausdehnung in Richtung des Fahrzeuginsassen erreicht. Das wird durch Verringerung der Ausdehnung des Gassackes in Richtungen erreicht, z. B. in Richtung auf die Windschutzscheibe, die beim Aufprall des Fahrzeuges für den Insassen weniger wirksam sind. Durch die Vergrößerung der Flächenausdehnung des Gassackes gegenüber dem Fahrzeuginsassen wird die Flächenpressung beim Aufprall des Insassen auf den Gassack weiter verringert.

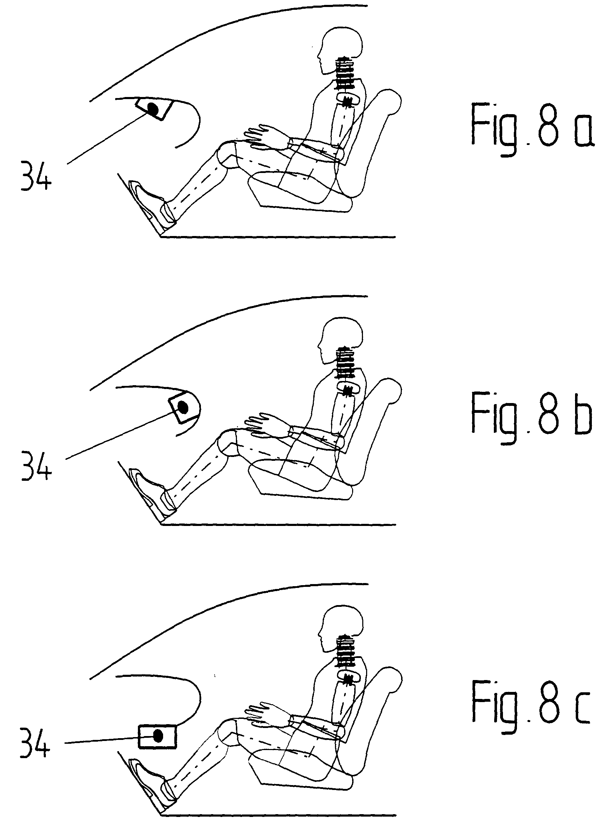

Die Figuren 8a bis 8c zeigen die verscheidenen Einbaumöglichkeiten für einen Beifahrerairbagmodul. Fig. 8a zeigt den Airbagmodul 34 "top-mounted", Fig. 8b "mid-mounted" und Fig. 8c "low-mounted.

## Patentansprüche

1. Airbagmodul, insbesondere für den Beifahrersitz, mit einem Gassack (41, 45), einem Gasgenerator (37, 44, 51) und einem diesem zugeordneten Gasdiffusor (27, 36, 43, 53), wobei
a) der kegelstumpf- oder quaderförmige Gasdiffusor (27, 36, 43, 53) mit unterschiedlich großen Ausströmöffnungen (38, 39) versehen ist und
b) der Gassack (41) sich im gefalteten Zustand zum überwiegenden Teil seitlich neben mindestens einer Seitenfläche des Gasdiffusors (27, 36, 43, 53) erstreckt.

2. Airbagmodul nach Anspruch 1, **dadurch gekennzeichnet**, daß der Gasdiffusor (36) in der gewünschten Hauptentfaltungsrichtung des Gassackes (41) gegenüber den übrigen Richtungen vergrößerte Ausströmöffnungen (29, 38) aufweist.

3. Airbagmodul nach mindestens einem der vorhergehenden Ansprüche, **dadurch gekennzeichnet**, daß der Gasdiffusor (43) asymmetrisch bezüglich des Rohrgasgenerators (44) angeordnet ist.

4. Airbagmodul nach mindestens einem der vorhergehenden Ansprüche, **dadurch gekennzeichnet**, daß der Gassack eine asymmetrische Kontur aufweist.

5. Airbagmodul nach mindestens einem der vorhergehenden Ansprüche, **dadurch gekennzeichnet**, daß der Gassack (45) neben dem Gasdiffusor (43) eines Rohrgasgenerators (44) asymmetrisch zu diesem gefaltet ist, wobei in einem Gasdiffusor-Bereich, der der Abdeckkappe (46) für den Gassack benachbart ist, nur eine Lage (45a) des Gassackes (45) vorgesehen ist, und daß der Gasdiffusor (43) auf der Seite (43a) mit der größten Faltenzahl größere Ausströmöffnungen (47) aufweist als in dem Bereich, der der Abdeckkappe (46) gegenüberliegt und in dem er nur eine Lage (45a) des Gassackes (45) aufweist.

6. Airbagmodul nach mindestens einem der vorhergehenden Ansprüche, **dadurch gekennzeichnet**, daß der sich in Längsrichtung des Rohrgasgenerators (44) erstreckende Gasdiffusor ((43) in dieser Richtung unterschiedlich große Ausströmöffnungen (47) aufweist.

7. Airbagmodul nach mindestens einem der vorhergehenden Ansprüche, **dadurch gekennzeichnet**, daß auf der Seite (43d) des Gasdiffusors (43), die der Seite (43a) des Gasdiffusors (43) mit der größten Faltenzahl des Gassackes (45) gegenüberliegt, nur eine Lage (45a) des Gassackes vorgeshen ist.

8. Airbagmodul **nach mindestens einem der vorhergehenden Ansprüche, dadurch gekennzeichnet**, daß der Gassack aus einem Oberteil (30) und einem Unterteil (31) besteht, daß er auf der zum Insassen zeigenden Seite so nach innen eingeschlagen ist, daß sich eine Tasche (32) bildet, und daß weiterhin das Oberteil im Bereich der Tasche (32) mit Reißnähten (33) versehen ist.

## Claims

1. Airbag module, more particularly for the passenger seat, with a gas bag (41,45), a gas generator (37, 44, 51) and a gas diffuser (27, 36, 43, 53) associated therewith, wherein
a) the frustoconical or rectangular shaped gas diffuser (27, 36, 43, 53) has different sized outflow openings (38,39) and
b) the gas bag (41) extends in the folded state for the most part laterally beside at least one side face of the gas diffuser (27, 36, 43, 53).

2. Airbag module according to claim 1 characterised in that the gas diffuser (36) has outflow openings (29,38) which are larger in the desired main unfolding direction of the gas bag (41) than in the other directions.

3. Airbag module according to at least one of the preceding claims, characterised in that the gas diffuser (43) is arranged asymmetrical relative to the tubular gas generator (44).

4. Airbag module according to at least one of the preceding claims, characterised in that the gas bag has an asymmetrical contour.

5. Airbag module according to at least one of the preceding claims, characterised in that the gas bag (45) is folded next to the gas diffuser (43) of a tubular gas generator (44) asymmetrical relative thereto wherein only one layer (45a) of the gas bag (45) is provided in a gas diffuser area which adjoins the cover flap (46) of the gas bag and that the gas diffuser (43) has on the side (43a) with the largest number of folds larger outflow openings (47) than in the area which is opposite the cover flap (46) and in which it has only one layer (45a) of the gas bag (45).

6. Airbag module according to at least one of the preceding claims, characterised in that the gas diffuser (43) extending in the longitudinal direction of the tubular gas generator (44) has outflow openings (47) of different size in this direction.

7. Airbag module according to at least one of the preceding claims, characterised in that on the side (43d) of the gas diffuser (43) which is opposite the side (43a) of the gas diffuser (35) having the largest number of folds of the gas bag (45) there is only one layer (45a) of the gas bag.

8. Airbag module according to at least one of the preceding claims, characterised in that the gas bag consists of an upper part (30) and lower part (31), that it is turned in on the side pointing towards the occupant so that a pocket (32) is formed and that furthermore the upper part has rip seams (33) in the area of the pocket (32).

## Revendications

1. Module d'air-bag notamment pour le passager avant, comportant un sac à gaz (41,45), un générateur de gaz (37,44,51) et un diffuseur de gaz (27,36,43,53) associé à ce générateur, et dans lequel
a) le diffuseur de gaz (27,36,43,53) de forme conique ou parallélépipédique est pourvu d'ouvertures de sortie (38,39) ayant des tailles différentes, et
b) le sac à gaz (41) s'étend, à l'état replié, sur une majeure partie latéralement à côté d'au moins une surface latérale du diffuseur de gaz (27,36,43,53).

2. Module d'air-bag selon la revendication 1, caractérisé en ce que le diffuseur de gaz (36) possède, dans la direction principale désirée de dépliage du sac à gaz (41) des ouvertures de sortie (29,38), qui sont élargies dans les autres directions.

3. Module d'air-bag selon au moins l'une des revendications précédentes, caractérisé en ce que le diffuseur de gaz (43) est disposé d'une manière dissymétrique par rapport au générateur tubulaire de gaz (44).

4. Module d'air-bag selon au moins l'une des revendications précédentes, caractérisé en ce que le sac à gaz possède un contour dissymétrique.

5. Module d'air-bag selon au moins l'une des revendications précédentes, caractérisé en ce que le sac à gaz (45) est replié à côté du diffuseur de gaz (43) d'un générateur tubulaire de gaz (44), d'une manière dissymétrique par rapport à ce dernier, seule une couche (45a) du sac à gaz (45) étant prévue dans une partie du diffuseur de gaz, qui est voisine du capot de recouvrement (46) pour le sac à gaz, et que le diffuseur de gaz (43) possède, sur le côté (43a) possédant le nombre le plus grand nombre de plis, des ouvertures de sortie (47) qui sont plus grandes que celles situées dans la partie qui est en vis-à-vis du capot de recouvrement (46) et dans laquelle le diffuseur de gaz ne possède qu'une couche (45a) du sac à gaz (45).

6. Module d'air-bag selon au moins l'une des revendications précédentes, caractérisé en ce que le diffuseur de gaz (43), qui s'étend dans la direction longitudinale du générateur tubulaire de gaz (44), possède, dans cette direction, des ouvertures de sortie (47) qui ont des tailles différentes.

7. Module d'air-bag selon au moins l'une des revendications précédentes, caractérisé en ce qu'une seule couche (45a) du sac à gaz est prévue sur le côté (43d) du diffuseur de gaz (43), qui est situé à l'opposé du côté (43a) du diffuseur de gaz (43) possédant le plus grand nombre de plis du sac à gaz (45).

8. Module d'air-bag selon au moins l'une des revendications précédentes, caractérisé en ce que le sac à gaz est constitué par une partie supérieure (30) et par une partie inférieure (31), et est repliée vers l'intérieur sur le côté tourné vers les passagers en formant une poche (32), et qu'en outre la partie supérieure dans la zone de la poche (32) est pourvue de fils d'arrachement (33).
